# EUROPÄISCHE PATENTANMELDUNG

(11) **EP 4 101 739 A1**
(43) Veröffentlichungstag der Anmeldung: **14.12.2022**
(21) Anmeldenummer: 21178950.8
(22) Anmeldetag: 11.06.2021
(51) Int. Cl.: B62D 25/00, B62D 29/00

(54) **DÄMMELEMENT**

(71) Anmelder: Sika Technology AG, 6340 Baar (CH)
(72) Erfinder: Krucker, Roman, 8055 Zürich (CH)
(74) Vertreter: Sika Patent Attorneys

(57) **Zusammenfassung**

Ein Dämmelement zur Dämmung eines Strukturelementes in einem Fahrzeug umfasst zumindest zwei miteinander verbundene Module, wobei die Module im Wesentlichen identisch ausgebildet sind, und wobei ein Modul jeweils einen Träger und ein expandierbares Material, welches am Träger angeordnet ist, hat. Das Dämmelement umfasst weiterhin zumindest ein Fixierungselement zur Fixierung des Dämmelementes am Strukturelement, wobei das Fixierungselement mit zumindest einem Modul verbunden ist.

## Beschreibung

Die Erfindung betrifft ein Dämmelement zur Dämmung eines Strukturelementes in einem Kraftfahrzeug.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (Englisch: baffle) verwendet, um Hohlräume abzudichten und/ oder akustisch abzuschotten, oder Verstärkungselemente (Englisch: reinforcer) verwendet, um Hohlräume zu verstärken.

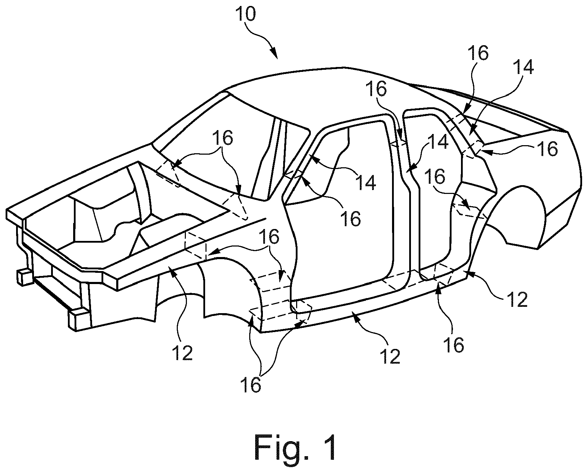

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12 auf. Solche Strukturelemente 12, 14 mit Hohlräumen werden üblicherweise mit Abdichtungs- und/oder Verstärkungselementen 16 abgedichtet bzw. verstärkt.

Nachteilig an den bisher bekannten Abdichtungs- und/oder Verstärkungselementen ist es, dass für jede Karosserieform und für jeden Hohlraum einer Karosserie ein individuell angepasstes Element hergestellt werden muss. Dies führt zu hohen Entwicklungs- und Herstellungskosten und ist insbesondere bei kleineren Fahrzeugserien nachteilhaft.

Es ist daher eine Aufgabe der vorliegenden Erfindung, ein verbessertes Dämmelement zur Dämmung eines Strukturelementes in einem Kraftfahrzeug zur Verfügung zu stellen, welches die Nachteile des Standes der Technik vermeidet. Das Dämmelement soll insbesondere wirtschaftliche Vorteile bei Kleinserien mit sich bringen und insgesamt einen Entwicklungs- und Herstellungsaufwand der Dämmelemente reduzieren.

Diese Aufgabe wird gelöst durch ein Dämmelement zur Dämmung eines Strukturelementes in einem Kraftfahrzeug, das Dämmelement umfassend: Zumindest zwei miteinander verbundene Module, wobei die Module im Wesentlichen identisch ausgebildet sind, und wobei ein Modul jeweils einen Träger und ein expandierbares Material, welches am Träger angeordnet ist, hat; und zumindest ein Fixierungselement zur Fixierung des Dämmelementes am Strukturelement, wobei das Fixierungselement mit zumindest einem Modul verbunden ist.

Ein Kerngedanke der vorliegenden Erfindung besteht insbesondere darin, dass durch standardisierte Bestandteile (Module und Fixierungselemente) eine Vielzahl von verschiedenen Dämmelemente geschaffen werden kann, mit welchen eine Vielzahl von verschieden geformten Hohlräumen gedämmt werden kann. Dies bietet den Vorteil, dass die Module zur Bildung der Dämmelemente in hoher Stückzahl produziert werden können, was vorteilhaft ist im Hinblick auf Werkzeugkosten und Entwicklungskosten. Insbesondere bei Spritzgussverfahren ist eine hohe Stückzahl notwendig, um kosteneffizient produzieren zu können.

Die Bezeichnung "Dämmelement" bzw. "Dämmung" bzw. "gedämmt" umfasst im Zusammenhang mit dieser Erfindung Elemente bzw. Strukturen bzw. Verfahrensschritte zur Abschottung und/oder Verschliessung und/oder Dämmung eines Strukturelementes. Diese verschiedenen Eigenschaften eines solchen Dämmelementes können dabei einzeln oder aber in Kombination miteinander auftreten.

In einer beispielhaften Ausführungsform hat das Dämmelement zumindest zwei Fixierungselemente zur Fixierung des Dämmelementes am Strukturelement.

Eine solche Ausgestaltung hat den Vorteil, dass dadurch das Dämmelement sicherer, insbesondere bezüglich einer Verdrehung, am Strukturelement fixiert werden kann.

In einer beispielhaften Weiterbildung ist zwischen den beiden Fixierungselementen zumindest ein Modul angeordnet.

In einer beispielhaften Weiterbildung sind zwischen den beiden Fixierungselementen zumindest zwei oder zumindest drei oder zumindest vier Module angeordnet.

In einer beispielhaften Ausführungsform ist zumindest ein Modul nicht zwischen den beiden Fixierungselementen angeordnet.

Eine solche Ausgestaltung hat den Vorteil, dass dadurch eine Region im Bereich eines Fixierungselementes besser ausgeschäumt werden kann.

In einer beispielhaften Ausführungsform umfasst das Dämmelement zumindest drei oder zumindest vier oder zumindest fünf Module.

In einer beispielhaften Ausführungsform sind die Module in einem eingebauten Zustand des Dämmelementes in Richtung einer Längsachse des Strukturelementes jeweils einander abdeckend angeordnet.

In einer beispielhaften Ausführungsform hat der Träger zumindest eine Auflagewand, welche in einem eingebauten Zustand des Dämmelementes im Wesentlichen orthogonal zur Längsachse des Strukturelementes verläuft.

Eine solche Ausgestaltung hat den Vorteil, dass dadurch eine Expansion des expandierbaren Materiales durch die Auflagewand geführt wird, in einer Richtung radial weg von der Längsachse des Dämmelementes. Dadurch können Hohlräume in Strukturelementen effizienter ausgeschäumt werden, bzw. es ist ein geringerer Materialeinsatz notwendig.

In einer beispielhaften Weiterbildung hat der Träger zwei miteinander verbundene Auflagewände hat, welche im Wesentlichen parallel zueinander ausgerichtet sind.

Eine solche Ausgestaltung hat den Vorteil, dass dadurch eine Expansion noch besser in radialer Richtung weg von einer Längsachse des Dämmelementes geführt wird, sodass eine gezieltere und effizientere Ausschäumung erreicht werden kann.

In einer beispielhaften Ausführungsform ist das expandierbare Material auf der Auflagewand angeordnet.

In einer beispielhaften Ausführungsform hat das expandierbare Material eine Dicke von 5 bis 20 mm, bevorzugt von 8 bis 17 mm, besonders bevorzugt von 10 bis 15 mm.

In einer beispielhaften Ausführungsform haben die Module jeweils ein erstes Kopplungselement und ein zweites Kopplungselement, wobei benachbarte Module jeweils über diese Kopplungselemente miteinander verbunden sind.

In einer ersten beispielhaften Weiterbildung sind diese Kopplungselemente als Steckverbindungen ausgebildet. Dabei kann beispielsweise ein erstes Kopplungselement als Stecker ausgebildet sein, welcher in ein zweites Kopplungselement, welches als Öffnung ausgebildet ist, gesteckt werden kann.

In einer beispielhaften Weiterbildung sind die Kopplungselemente dabei verdrehsicher ausgebildet. Beispielsweise kann ein Querschnitt der Kopplungselemente hierzu eine Ausbuchtung oder Ähnliches aufweist.

In einer zweiten beispielhaften Weiterbildung sind diese Kopplungselemente als Befestigungsclip mit Schnappverschluss ausgebildet. Dabei kann beispielsweise ein erstes Kopplungselement als Clip ausgebildet sein, welcher in ein zweites Kopplungselement, welches als entsprechende Clip-Öffnung ausgebildet ist, gesteckt werden kann.

In einer dritten beispielhaften Weiterbildung sind diese Kopplungselemente als Verklebungsoberflächen ausgebildet. Dabei kann beispielsweise ein erstes Kopplungselement als Oberfläche ausgebildet sein, welche mit einem zweiten Kopplungselement, welches als ebenfalls als Oberfläche ausgebildet ist, verklebt werden kann.

In einer beispielhaften Weiterbildung sind die beiden Oberflächen im Wesentlichen ebenförmig oder konträr zueinander ausgebildet. Dies bietet den Vorteil, dass dadurch eine grössere Klebefläche erreicht werden kann.

In einer beispielhaften Ausführungsform sind die zumindest zwei Module und das zumindest eine Fixierungselement derart durch die Kopplungselemente miteinander verbunden, dass die einzelnen Elemente nicht relativ zueinander bewegt werden können. Insbesondere sind die einzelnen Elemente starr miteinander verbunden.

In einer beispielhaften Ausführungsform hat ein Modul eine Länge und eine Breite, welche jeweils relativ zu einer Längsachse des Strukturelementes in einem eingebauten Zustand des Dämmelementes gemessen werden.

In einer beispielhaften Ausführungsform beträgt die Länge eines Modules zwischen 10 und 80 mm, bevorzugt zwischen 15 und 50 mm, besonders bevorzugt zwischen 20 und 35 mm.

In einer beispielhaften Ausführungsform beträgt die Breite eines Modules zwischen 10 und 80 mm, bevorzugt zwischen 15 und 50 mm, besonders bevorzugt zwischen 20 und 35 mm.

In einer beispielhaften Ausführungsform beträgt eine Dicke des expandierbaren Materials, gemessen entlang einer Längsachse des Strukturelementes in einem eingebauten Zustand des Dämmelementes, zwischen 30 und 95 % der Länge eines Modules, ebenfalls gemessen entlang einer Längsachse des Strukturelementes in einem eingebauten Zustand des Dämmelementes.

In einer beispielhaften Weiterbildung beträgt die Dicke des expandierbaren Materials zwischen 40 und 90 % oder zwischen 50 und 85 % der Länge eines Moduls.

In einer beispielhaften Ausführungsform ist ein Grundriss eines Moduls quadratisch oder kreisförmig ausgebildet. In einer beispielhaften Weiterbildung entspricht der Grundriss eines Moduls im Wesentlichen dem Grundriss der Auflagewand.

Eine solche Ausgestaltung hat den Vorteil, dass dadurch eine gleichmässige Ausschäumung in alle Richtungen radial weg von einer Längsachse des Dämmelementes erreicht werden kann.

In einer beispielhaften Ausführungsform ist das Fixierungselement als Clip, insbesondere als Befestigungsclip mit Schnappverschluss, ausgebildet.

In einer alternativen Ausführungsform ist das Fixierungselement als Lasche oder als Haken ausgebildet.

In einer beispielhaften Ausführungsform hat das Fixierungselement ein erstes Kopplungselement und ein zweites Kopplungselement, wobei die Kopplungselemente des Fixierungselementes kompatibel sind mit den Kopplungselementen der Module.

In einer beispielhaften Weiterbildung sind die Kopplungselemente gleich ausgebildet wie oben zu den Kopplungselementen der Module beschrieben.

### Expandierbares Material

Als expandierbares Material können grundsätzlich verschiedene Materialien eingesetzt werden, welche zur Schäumung gebracht werden können. Das Material kann dabei Verstärkungseigenschaften aufweisen oder auch nicht. Typischerweise wird das expandierbare Material thermisch, durch Feuchtigkeit oder durch elektromagnetische Strahlung zur Expansion gebracht.

Ein solches expandierbares Material weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage, Schaumstrukturen in Polymeren zu erzeugen.

Bevorzugt wird das expandierbare Material thermisch geschäumt wobei chemische Treibmittel eingesetzt werden. Als chemische Treibmittel eignen sich beispielsweise Azodicarbonamide, Sulfohydrazide, Hydrogencarbonate oder Carbonate.

Geeignete Treibmittel sind beispielsweise auch kommerziell erhältlich unter dem Handelsnamen Expancel^{®} von der Firma Akzo Nobel, Niederlande, oder unter dem Handelsnamen Celogen^{®} von der Firma Chemtura Corp., USA.

Die für die Schäumung erforderliche Wärme kann durch externe oder durch interne Wärmequellen, wie einer exothermen chemischen Reaktion, eingebracht werden. Das schäumbare Material ist vorzugsweise bei einer Temperatur von ≤ 250°C, insbesondere von 100°C bis 250°C, bevorzugt von 120°C bis 240°C, bevorzugt von 130°C bis 230°C schäumbar.

Als expandierbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Füssigharzes, 0 bis 30 Gew.-% eines Epoxid-Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Als Zähigkeitsmodifikatoren eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete expandierbare Materialien sind Treibmittel enthaltende einkomponentige Polyurethanzusammensetzungen, aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50 °C sein. Die Isocyanatgruppen des Polyisocyanats können beispielsweise mit Nucleophilen wie Caprolactam, Phenolen oder Benzoxalonen blockiert sein. Weiterhin eignen sich blockierte Polysocyanate wie sie beispielsweise in der Pulverlacktechnologie zum Einsatz kommen und beispielsweise unter den Handelsnamen Vestagon^{®} BF 1350 und Vestagon^{®} BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschrieben sind in EP 0 204 970.

Weiterhin eignen sich als expandierbare Materialien Treibmittel enthaltende zweikomponentige Epoxid/Polyurethan-Zusammensetzungen, wie sie beispielsweise beschrieben sind in WO 2005/080524 A1.

Weiterhin eignen sich als expandierbare Materialien Treibmittel enthaltende Ethylen-Vinyl-Acetat-Zusammensetzungen.

Ebenfalls geeignete expandierbare Materialien werden beispielsweise unter dem Handelsnamen SikaBaffle^{®} 240, SikaBaffle^{®} 250 oder SikaBaffle^{®} 255 von der Sika Corp., USA, vertrieben und sind in den Patenten US 5,266,133 und US 5,373,027 beschrieben. Solche expandierbaren Materialien sind für die vorliegende Erfindung besonders bevorzugt.

Als expandierbare Materialien mit Verstärkungseigenschaften sind beispiels-weise diejenigen bevorzugt, welche unter dem Handelsnamen SikaReinforcer^{®} 941 von der Sika Corp., USA, vertrieben werden. Diese sind beschrieben in US 6,387,470.

In einer beispielhaften Ausführungsform hat das expandierbare Material eine Expansionsrate von 800% bis 5000%, bevorzugt von 1000% bis 4000%, besonders bevorzugt von 1500% bis 3000%.Expandierbare Materialien mit solchen Expansionsraten bieten den Vorteil, dass dadurch eine zuverlässige Abdichtung bzw. Dämmung des Strukturelementes gegen Flüssigkeiten und Schall erreicht werden kann.

In einer beispielhaften Ausführungsform ist das expandierbare Material als temperaturinduziertes Material ausgebildet.

Dies hat den Vorteil, dass dadurch der Ofen zur Einbrennung der

Tauchlackierungsflüssigkeit benutzt werden kann, um das expandierbare Material zu expandieren und um dadurch den Hohlraum zu dämmen. Somit ist kein zusätzlicher Arbeitsschritt notwendig.

### Träger

Der Träger kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone, welche insbesondere auch geschäumt sind; Metalle, insbesondere Aluminium und Stahl; oder gewachsene organische Materialien, insbesondere Holz- oder andere (gepresste) Faserwerkstoffe oder glasartige oder keramische Materialien; speziell auch geschäumte Materialien dieser Art; oder beliebige Kombinationen dieser Materialien. Besonders bevorzugt wird Polyamid, insbesondere Polyamid 6, Polyamid 6,6, Polyamid 11, Polyamid 12 oder ein Gemisch davon verwendet.

Weiterhin kann der Träger einen beliebigen Aufbau und eine beliebige Struktur aufweisen. Es kann beispielsweise massiv, hohl, oder geschäumt sein oder eine gitterartige Struktur aufweisen. Die Oberfläche des Trägers kann typischerweise glatt, rau oder strukturiert sein.

Bei Dämmelementen, bei welchen sich das expandierbare Material auf einem Träger befindet, unterscheidet sich das Herstellungsverfahren dementsprechend, ob der Träger aus einem durch Spritzguss verarbeitbaren Material besteht oder nicht. Ist dies der Fall, wird üblicherweise ein Zweikomponenten-Spritzgussverfahren eingesetzt. Dabei wird zuerst eine erste Komponente, in diesem Fall der Träger, gespritzt. Nach Erstarren dieser ersten Komponente wird die Kavität im Werkzeug vergrössert, bzw. angepasst, oder der hergestellte Spritzling wird in ein neues Werkzeug gelegt, und eine zweite Komponente, in diesem Fall das expandierbare Material, wird mit einem zweiten Spritzaggregat an die erste Komponente angespritzt.

Besteht der Träger aus einem Material, welches sich nicht durch das Spritzgussverfahren herstellen lässt, also beispielsweise aus einem Metall, wird der Träger in ein entsprechendes Werkzeug gelegt und das expandierbare Material wird an den Träger angespritzt. Selbstverständlich besteht auch die Möglichkeit das expandierbare Material durch spezielle Befestigungsmittel oder -verfahren an dem Träger zu befestigen.

Weiterhin können Träger auch durch andere Verfahren hergestellt werden, beispielsweise durch Extrusion.

### System

Die eingangs gestellte Aufgabe wird zudem gelöst durch ein System in einem Kraftfahrzeug, das System umfassend: ein Strukturelement, welches einen Hohlraum hat; und ein Dämmelement gemäss obiger Beschreibung; wobei das Dämmelement im Hohlraum des Strukturelementes angeordnet ist.

In einer beispielhaften Ausführungsform ist das Strukturelement ein Abschnitt einer Säule oder eines Trägers oder einer Verstrebung einer Karosserie eines Kraftfahrzeugs.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung einer Karosserie;
- Fig. 2a bis 2d: eine schematische Darstellung eines beispielhaften Dämmelements bzw. dessen Bestandteilen;
- Fig. 3a und 3b: eine schematische Darstellung eines beispielhaften Dämmelements bzw. dessen Bestandteilen;
- Fig. 4: eine schematische Darstellung eines beispielhaften Moduls;

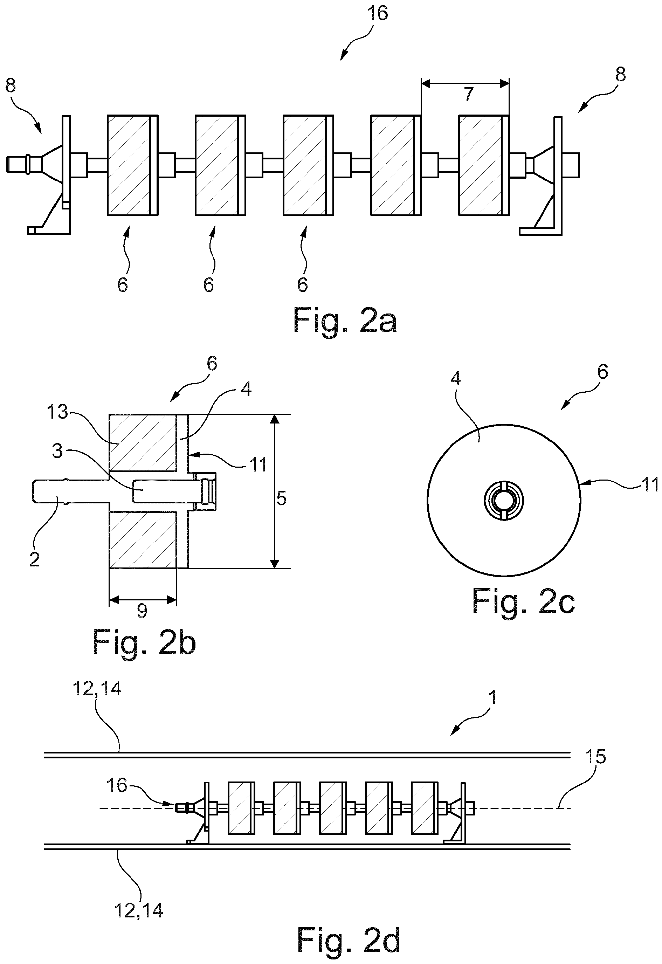

In den Fig. 2a bis 2d ist ein beispielhaftes Dämmelement 16, bzw. dessen Bestandteile schematisch dargestellt. In Fig. 2a ist dabei das ganze Dämmelement 16 dargestellt, in Fig. 2b ist ein Querschnitt durch ein einzelnes Modul 6 des Dämmelementes 16 dargestellt, in Fig. 2c ist eine Draufsicht auf ein einzelnes Modul 6 des Dämmelementes 16 dargestellt, und in Fig. 2d ist ein Dämmelement 16 in eingebautem Zustand in einem Strukturelement 12, 14 dargestellt.

In diesem Ausführungsbeispiel umfasst das Dämmelement 16 fünf Module 6 und zwei Fixierungselemente 8. Dabei sind alle Module 6 zwischen den beiden Fixierungselementen 8 angeordnet.

Die Module 6 und die Fixierungselemente 8 haben jeweils kompatible Kopplungselemente 2, 3, über welche benachbarte Elemente 6, 8 miteinander verbunden sind. In diesem Beispiel sind die Kopplungselemente 2, 3 als Steckerverbindung ausgebildet.

Die Module 6 haben in diesem Ausführungsbeispiel einen runden Grundriss. Der Träger 11 hat dabei eine Auflagewand 4, welche so ausgebildet ist, dass sie in einem eingebauten Zustand des Dämmelementes 16 im Wesentlichen orthogonal zu einer Längsachse 15 des Strukturelementes 12, 14 verläuft. Das expandierbare Material 13 ist dabei auf dieser Auflagewand 4 angeordnet. Bei einer Expansion des expandierbaren Materiales 13 wird die Expansion durch die Auflagewand 4 in Richtungen, welche radial weg von der Längsachse 15 des Strukturelementes 12, 14 führen, geführt. Dies führt zu einer besonders effizienten Ausschäumung eines Hohlraumes des Strukurelementes 12, 14.

Die Module 6 haben eine Breite 5 und eine Länge 7, wobei sich die Länge 7 auf eine Länge in verbautem Zustand bezieht (Fig. 2a). Das expandierbare Material 13 hat eine Dicke 9, welche in einer Richtung der Längsachse 15 des Strukturelementes 12, 14 gemessen wird in einem eingebauten Zustand des Dämmelementes 16 (Fig. 2b). Diese Dicke 9 des expandierbaren Materiales 13 kann beispielsweise ungefähr 50% der Länge 7 des Modules 6 entsprechen, wie in diesem Ausführungsbeispiel gezeigt.

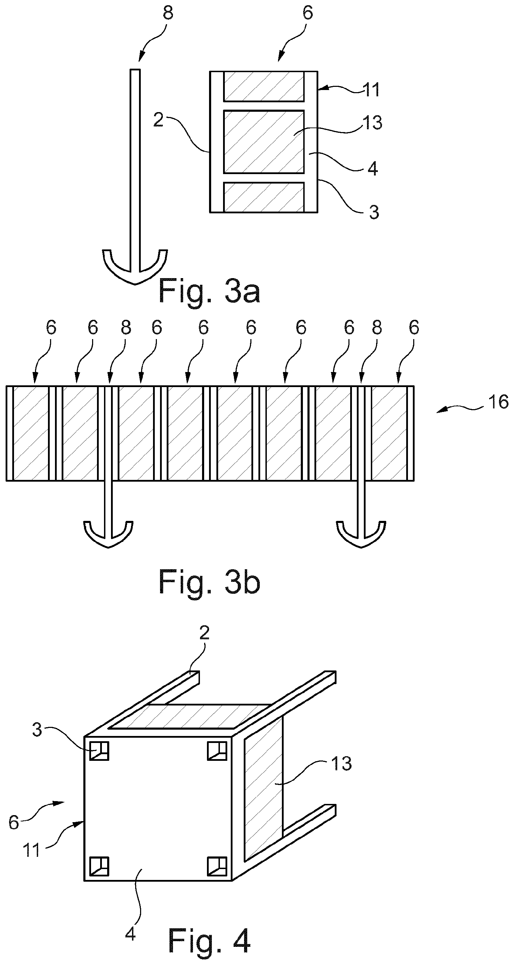

In den Fig. 3a und 3b ist ein weiteres Ausführungsbeispiel eines Dämmelementes 16 bzw. dessen Bestandteilen 6, 8 schematisch dargestellt. In diesem Beispiel haben die Module 6 jeweils zwei Auflagewände 4, wobei das expandierbare Material 13 zwischen diesen Auflagewänden 4 angeordnet ist. Die Auflagewände 4 sind durch zwei Rippen, welche von expandierbarem Material 13 umgeben sind, miteinander verbunden.

Die Kopplungselemente 2, 3 sind in diesem Ausführungsbeispiel als Verklebungsoberflächen ausgebildet. Dabei sind diese Verklebungsoberflächen der Module 6 und der Fixierungselemente 8 einander angepasst, sodass die Bestandteile 6, 8 kompatibel miteinander sind, damit dadurch verschiedene Dämmelemente 16 aus denselben Bestandteilen 6, 8 aufgebaut werden können.

Das Dämmelement 16 in Fig. 3b umfasst acht Module 6 und zwei Fixierungselemente 8, wobei fünf Module 6 zwischen den Fixierungselementen 8 angeordnet sind, und drei Module 6 nicht zwischen den Fixierungselementen 8 angeordnet sind.

In Fig. 4 ist schliesslich ein drittes Ausführungsbeispiel für ein Modul 6 schematisch dargestellt. In diesem Ausführungsbeispiel umfassen die Kopplungselemente 2, 3 mehrere stiftartige Fortsätze und mehrere zugeordnete Öffnungen. Wiederum hat der Träger 11 eine Auflagewand 4, an welcher das expandierbare Material 13 angeordnet ist.

### Bezugszeichenliste

- 1: System
- 2: erstes Kopplungselement
- 3: zweites Kopplungselement
- 4: Auflagewand
- 5: Breite (eines Modules)
- 6: Modul
- 7: Länge (eines Modules)
- 8: Fixierungselement
- 9: Dicke des expandierbaren Materials
- 10: Karosserie
- 11: Träger
- 12: Strukturelement
- 13: expandierbares Material
- 14: Strukturelement
- 15: Längsachse
- 16: Dämmelement

## Patentansprüche

1. Dämmelement (16) zur Dämmung eines Strukturelementes (12, 14) in einem Kraftfahrzeug, das Dämmelement (16) umfassend:
zumindest zwei miteinander verbundene Module (6), wobei die Module (6) im Wesentlichen identisch ausgebildet sind, und wobei ein Modul (6) jeweils einen Träger (11) und ein expandierbares Material (13), welches am Träger (11) angeordnet ist, hat; und
zumindest ein Fixierungselement (8) zur Fixierung des Dämmelementes (16) am Strukturelement (12, 14), wobei das Fixierungselement (8) mit zumindest einem Modul (6) verbunden ist.

2. Dämmelement (16) nach Anspruch 1, wobei das Dämmelement (16) zumindest zwei Fixierungselemente (8) zur Fixierung des Dämmelementes (16) am Strukturelement (12, 14) hat.

3. Dämmelement (16) nach Anspruch 2, wobei zwischen den beiden Fixierungselementen (8) zumindest ein Modul (6) angeordnet ist.

4. Dämmelement (16) nach einem der Ansprüche 2 oder 3, wobei zumindest ein Modul (6) nicht zwischen den beiden Fixierungselementen (8) angeordnet ist.

5. Dämmelement (16) nach einem der vorhergehenden Ansprüche, wobei das Dämmelement (16) zumindest drei oder zumindest vier oder zumindest fünf Module (6) umfasst.

6. Dämmelement (16) nach einem der vorhergehenden Ansprüche, wobei die Module (6) in einem eingebauten Zustand des Dämmelementes (16) in Richtung einer Längsachse (15) des Strukturelementes (12, 14) jeweils einander abdeckend angeordnet sind.

7. Dämmelement (16) nach einem der vorhergehenden Ansprüche, wobei der Träger (11) zumindest eine Auflagewand (4) hat, welche in einem eingebauten Zustand des Dämmelementes (16) im Wesentlichen orthogonal zur Längsachse (15) des Strukturelementes (12, 14) verläuft.

8. Dämmelement (16) nach Anspruch 7, wobei der Träger (11) zwei miteinander verbundene Auflagewände (4) hat, welche im Wesentlichen parallel zueinander ausgerichtet sind.

9. Dämmelement (16) nach einem der Ansprüche 7 oder 8, wobei das expandierbare Material (13) auf der Auflagewand (4) angeordnet ist.

10. Dämmelement (16) nach einem der vorhergehenden Ansprüche, wobei die Module (6) jeweils ein erstes Kopplungselement (2) und ein zweites Kopplungselement (3) haben, wobei benachbarte Module (6) jeweils über diese Kopplungselemente (2, 3) miteinander verbunden sind.

11. Dämmelement (16) nach einem der vorhergehenden Ansprüche, wobei ein Grundriss eines Moduls (6) quadratisch oder kreisförmig ausgebildet ist.

12. Dämmelement (16) nach einem der vorhergehenden Ansprüche, wobei das expandierbare Material (13) eine Dicke (9) von 5 bis 20 mm hat.

13. Dämmelement (16) nach einem der vorhergehenden Ansprüche, wobei das Fixierungselement (8) als Clip oder als Lasche oder als Haken ausgebildet ist.

14. Dämmelement (16) nach einem der vorhergehenden Ansprüche, wobei das Fixierungselement (8) ein erstes Kopplungselement (2) und ein zweites Kopplungselement (3) hat, und wobei die Kopplungselemente (2, 3) des Fixierungselementes (8) kompatibel sind mit den Kopplungselementen (2, 3) der Module (6).

15. System in einem Kraftfahrzeug, das System umfassend:
ein Strukturelement (12, 14), welches einen Hohlraum hat; und
ein Dämmelement (16) nach einem der Ansprüche 1 bis 14;
wobei das Dämmelement (16) im Hohlraum des Strukturelementes (12, 14) angeordnet ist.
